# EUROPÄISCHE PATENTSCHRIFT

(11) **EP 4 118 622 B1**
(45) Veröffentlichungstag und Bekanntmachung des Hinweises auf die Patenterteilung: **29.04.2026**
(21) Anmeldenummer: 21711508.8
(22) Anmeldetag: 09.03.2021
(51) Int. Cl.: G06T 7/70, G06T 7/579, B60R 11/04, B62D 13/00, B60R 11/00

(54) **VERFAHREN ZUM ERMITTELN EINER OBJEKT-INFORMATION ZU EINEM OBJEKT IN EINER FAHRZEUGUMGEBUNG, STEUEREINHEIT UND FAHRZEUG**
METHOD FOR DETERMINING OBJECT INFORMATION RELATING TO AN OBJECT IN A VEHICLE ENVIRONMENT, CONTROL UNIT AND VEHICLE
PROCÉDÉ DE DÉTERMINATION D'INFORMATIONS D'OBJET RELATIVES À UN OBJET DANS UN ENVIRONNEMENT DE VÉHICULE, UNITÉ DE COMMANDE ET VÉHICULE

(30) Priorität: 09.03.2020 DE 102020106302
(43) Veröffentlichungstag der Anmeldung: 18.01.2023
(73) Patentinhaber: ZF CV Systems Global GmbH, 3006 Bern (CH)
(72) Erfinder: RICKE, Janik, 31311 Uetze (DE); KLINGER, Tobias, 31832 Springe (DE); DIECKMANN, Thomas, 30982 Pattensen (DE)
(74) Vertreter: Schäferjohann, Volker
(86) Internationale Anmeldenummer: PCT/EP2021/055827
(87) Internationale Veröffentlichungsnummer: WO 2021/180670

(56) Entgegenhaltungen:
- DE-A1- 102009 039 111
- US-A1- 2017 341 583
- FINTZEL K ET AL: "3D vision system for vehicles", PROC. IEEE INTELLIGENT VEHICLE SYMPOSIUM, 2003,, 9 June 2003 (2003-06-09), pages 174 - 179, XP010645870, ISBN: 978-0-7803-7848-3

## Beschreibung

Die Erfindung betrifft ein Verfahren zum Ermitteln einer Objekt-Information eines Objektes in einer Umgebung eines mehrteiligen Fahrzeuges sowie eine Steuereinheit und ein Fahrzeug zur Durchführung des Verfahrens.

Aus dem Stand der Technik ist bekannt, wie mithilfe einer einzelnen Kamera durch die Vorwärts- oder Rückwärtsbewegung eines Fahrzeugs, an dem die Kamera montiert ist, anhand photogrammetrischer Methoden die Struktur der Szene in 3D bestimmt werden kann (sog. Structure from Motion (SfM)). Ferner ist aus dem Stand der Technik bekannt, dass die Bestimmung der Basislinie zwischen zwei Standpunkten der Kamera, die für die Triangulation zur Tiefenbestimmung entweder bekannt oder zu schätzen ist, durch Auswertung von Odometrie-Daten des Fahrzeuges unterstützt werden kann.

In US2018/0204072A1 ist weiterhin vorgesehen, Kameras an einem Anhänger eines Fahrzeug-Gespanns zu fixieren. Weiterhin sind Fahrdynamik-Sensoren vorgesehen, die Odometrie-Daten, die die Fahrzeugbewegung betreffen, ausgeben, beispielsweise eine Fahrzeuggeschwindigkeit. Die von der Kamera ausgegebenen Kamera-Daten werden mit den Odometrie-Daten abgeglichen, wobei die Odometrie-Daten für die Kompensation der Fahrzeugbewegung beim Verarbeiten der Kamera-Daten zum Erstellen von Bildern genutzt werden. Dabei können auch Kamera-Daten unterschiedlicher Kameras zusammengefügt werden.

In DE 10 2005 009 814 B4 ist vorgesehen, Kamera-Daten zusammen mit Odometrie-Daten, die von Raddrehzahlsensoren ausgegeben werden, zu verarbeiten, um eine Gierrate zu ermitteln. In DE 60 009 000 T2 ist weiterhin eine Bildverarbeitung unter Berücksichtigung von Odometrie-Daten des Fahrzeuges vorgesehen, um den Fahrer beim Einparken zu unterstützen. In DE 10 2015 105 248 A1 wird ein Bild von einer ersten Kamera zusammen mit einem Bild von einer zweiten Kamera in Verbindung mit Odometrie-Daten verarbeitet, wobei die Kameras an einem Anhänger und einem Zugfahrzeug eines mehrteiligen Fahrzeugs angeordnet sein können. Die Bilder, die die verschiedenen Kameras aufgenommen und in Form von Kamera-Daten ausgegeben haben, werden zusammengesetzt. Daraus wird ein kombiniertes Bild der Umgebung erzeugt, wobei in der Kurvenfahrt beispielsweise auch ein Knickwinkel berücksichtigt wird, der die Standpunkte der Kameras zueinander charakterisiert. Eine Vogelperspektive kann über das komplette mehrteilige Fahrzeug gelegt werden, um die Umgebung um das Fahrzeug anzuzeigen, um beispielsweise eine Einparkhilfe zu ermöglichen.

In WO 2016/164118 ist eine omnidirektionale Kamera vorgesehen, die Objekt-Punkte von Objekten in einer Umgebung des Fahrzeuges erfasst und in Abhängigkeit davon Kamera-Daten ausgibt. Mithilfe einer Steuereinrichtung im Fahrzeug werden die Kamera-Daten unter Einbezug aufgenommener Odometrie-Daten verarbeitet, wobei die Odometrie-Daten, z.B. von Raddrehzahl-Sensoren, Positions-Sensoren oder einem Lenkwinkel-Sensor, über den Datenbus des Fahrzeuges empfangen werden. Die Objekt-Punkte in der Umgebung des Fahrzeuges, die von Interesse sind, werden von der Kamera erkannt und anhand der Odometrie-Daten wird durch die Steuereinrichtung ein Abstand zu dem dem erfassten Objekt-Punkt zugeordneten Objekt ermittelt. Dafür werden über die eine Kamera eine Mehrzahl von Bildern aufgenommen, wobei die Bilder aus verschiedenen Standpunkten mit überlappenden Sichtfeldern aufgenommen sind. Durch das Verfolgen von Objektpunkten kann mittels Triangulation und Bündelausgleichung eine Tiefeninformation der Szene geschätzt werden. Die Kamera-Daten werden außerdem in Form von Bildern auf einem Display für den Fahrer dargestellt. Die Bilder sowie der ermittelte Abstand dienen dazu, das Rangieren eines PKW als Zugfahrzeug an einen Anhänger zu erleichtern, um diesen anzukuppeln. Weitere Objekte wie der Boden, Fußgänger, etc. können zwar erkannt werden, allerdings setzt dies eine ausreichende Bewegung des Fahrzeugs voraus, da nur auf diese Weise unterschiedliche Standpunkte für die Kamera eingestellt werden können.

Aus dem Dokument DE102009039111A1 ist es bekannt den Knickwinkel eines Fahrzeug-Gespanns mit Hilfe zweier GPS-Empfänger zu erfassen.

Aus dem Dokument DE102017111530A1 ist es bekannt den Schwenkwinkel eines Anhängerfahrzeuges auf einem Display dem Fahrer anzuzeigen aus der Vogelperspektive. Dazu werden die Bilddaten mehrerer Kameras in Zugfahrzeug und Anhängerfahrzeug benutzt.

Aus dem Dokument XP010645870, Fintzel K., Bendahan R., Vestri C., Bougnoux S., Yamamoto S., Kakinami T. Proc. IEEE Intelligent Vehicle Symposium SYMPOSIUM, 2003, 2003-06-09 - 2003-06-11, 2003-06-09, Seiten 174 - 179 ist es bekannt das Structure-from-Motion Verfahren für die Erkennung von Objekten in der Umgebung von Fahrzeugen einzusetzen.

Nachteilig ist somit, dass beispielsweise eine Detektion von an Boden liegenden Personen im Stillstand oder bei sehr niedrigen, nicht auflösbaren Geschwindigkeiten nicht möglich ist. Auch sonstige Objekte in der Fahrzeugumgebung können durch "Structure from Motion" nicht erkannt werden, wenn sich das Fahrzeug nicht oder nur sehr langsam bewegt. Damit kann im Stillstand keine räumliche Erfassung der Umgebung des Fahrzeuges bzw. eines Objektes mit lediglich einer Kamera erreicht werden, so dass weder eine automatisierte Klassifizierung von Objekten noch eine Ermittlung eines Abstandes ermöglicht wird.

Die Sicherheitsanforderungen an fahrerlose Flurfahrzeuge erfordern aber beispielsweise nach ISO 3691-4 die Detektion von am Boden liegenden Personen, so dass diese bereits vor der Abfahrt, d.h. im Stillstand oder bei sehr geringen Geschwindigkeiten, erkannt werden müssen. Auch an einer Ampel oder in einer Parksituation können keine Messungen des Abstandes oder Objektklassifizierungen oder die Ermittlung weiterer räumlicher Objekt-Informationen eines Objektes mit den bekannten Systemen erfolgen.

Aufgabe der Erfindung ist, ein Verfahren zum Ermitteln einer Objekt-Information eines Objektes anzugeben, mit dem mit nur einer an einem Anhänger angeordneten Kamera eine räumliche Betrachtung der Fahrzeugumgebung möglichst genau und zuverlässig ermöglicht wird. Aufgabe ist weiterhin, eine Steuereinheit sowie ein Fahrzeug anzugeben.

Diese Aufgabe wird durch ein Verfahren, eine Steuereinheit sowie ein Fahrzeug gemäß den unabhängigen Ansprüchen gelöst. Die Unteransprüche geben bevorzugte Weiterbildungen an.

Demnach ist ein gattungsgemäßes Verfahren zum Ermitteln einer Objekt-Information zu einem Objekt in einer Umgebung eines mehrteiligen Fahrzeuges aus zumindest einem Zugfahrzeug und zumindest einem Anhänger vorgesehen, wobei zumindest an dem Anhänger mindestens eine Anhänger-Kamera angeordnet ist, mit mindestens den folgenden Schritten:
- Erfassen der Umgebung mit der mindestens einen Anhänger-Kamera von einem ersten Standpunkt aus und in Abhängigkeit davon Erstellen eines ersten Bildes bestehend aus ersten Bildpunkten;
- Verändern des Standpunktes der mindestens einen Anhänger-Kamera;
- Erfassen der Umgebung mit der mindestens einen Anhänger-Kamera von einem zweiten Standpunkt aus und in Abhängigkeit davon Erstellen eines zweiten Bildes bestehend aus zweiten Bildpunkten, wobei sich der erste Standpunkt durch zwischenzeitliches Verändern des Standpunktes der Anhänger-Kamera von dem zweiten Standpunkt unterscheidet;
- Ermitteln einer Objekt-Information zu einem Objekt in der erfassten Umgebung durch:
- Auswählen von mindestens einem ersten Bildpunkt in dem ersten Bild und mindestens einem zweiten Bildpunkt in dem zweiten Bild, wobei der erste Bildpunkt und der zweite Bildpunkt derartig ausgewählt werden, dass diese demselben Objektpunkt des Objektes in der erfassten Umgebung zugeordnet sind, und
- Bestimmen von Objektkoordinaten des zugeordneten Objektpunktes aus ersten Bildkoordinaten des mindestens einen ersten Bildpunktes und zweiten Bildkoordinaten des mindestens einen zweiten Bildpunktes durch Triangulation unter Annahme einer Basislänge zwischen den beiden Standpunkten der Kamera wobei die Basislänge zwischen den beiden Standpunkten in Abhängigkeit von Odometrie-Daten des Fahrzeuges ermittelt wird, wobei die Odometrie-Daten eine Verstellung der Anhänger-Kamera zwischen den beiden Standpunkten charakterisieren.

Erfindungsgemäß ist dabei vorgesehen, dass die Odometrie-Daten einen Knickwinkel zwischen dem mindestens einen Anhänger und dem mindestens einen Zugfahrzeug enthalten und/oder abhängig von dem Knickwinkel sind. Dadurch wird vorteilhafterweise bereits erreicht, dass die Ermittlung der Basislänge durch Odometrie genauer wird, da ergänzend auch auf den Knickwinkel zurückgegriffen wird. Dieser kann weitere Informationen bezüglich der Bewegung des Anhängers liefern, die aus den bisher für eine Odometrie verwendeten Daten, beispielsweise einem Lenkwinkel oder Raddrehzahl-Signalen, nicht zur Verfügung standen.

Demnach kann aus dem Drehzahlverhalten der Räder nicht zuverlässig auf ein Verschwenken des Anhängers, beispielsweise bei einem Rangiervorgang oder während eines Einparkvorganges, geschlossen werden und damit auch nicht auf eine genaue Positionierung des Anhängers bzw. der Anhänger-Kamera zwischen den beiden Standpunkten. Dies folgt insbesondere daraus, dass die Räder des Anhängers bei Lenkbewegungen auf der Fahrbahnoberfläche reiben bzw. rutschen, wodurch sich keine zuverlässigen Aussagen über eine Drehbewegung treffen lassen. Auch aus dem Lenkwinkel des Zugfahrzeuges kann nicht in zuverlässiger Weise auf die tatsächliche Bewegung des Anhängers geschlossen werden. Insofern kann die Odometrie unter Berücksichtigung des Knickwinkels_{[TK1]} genauere Ergebnisse bezüglich der Basislänge liefen, wodurch auch zuverlässigere Angaben zu den Tiefeninformation eines Objektes durch Structure-from-Motion getroffen werden können.

Vorzugsweise kann dabei vorgesehen sein, dass der Knickwinkel
- über einen aktiven Knickwinkelsensor an einem Ankuppelpunkt zwischen dem mindestens einen Zugfahrzeug und dem mindestens einen Anhänger, beispielsweise einem Kingpin/Königszapfen oder einer Anhängerkupplung, und/oder
- in Abhängigkeit von erfassten Bildern einer Kamera am Zugfahrzeug und/oder am Anhänger ermittelt wird.

Damit ist eine variable Ermittlung des Knickwinkels möglich, wobei ein aktiver Knickwinkelsensor eine sehr einfache, zuverlässige und kostengünstige Ermittlung des Knickwinkels ermöglicht.

Vorzugsweise kann weiterhin vorgesehen sein, dass die Odometrie-Daten weiterhin abhängig von einem Verstellweg erzeugt werden, wobei die mindestens eine Anhänger-Kamera durch Ansteuern eines aktiven Aktoriksystems am Anhänger um den Verstellweg verstellt wird, ohne dabei einen Fahrzustand des Fahrzeuges zu verändern. Unter Fahrzustand wird dabei der Bewegungszustand des Fahrzeuges in seiner Gesamtheit verstanden, das heißt zum Beispiel der Stillstand oder eine Fahrt mit einer bestimmten Fahrzeug-Geschwindigkeit. Das aktive Aktoriksystem verändert diese Bewegung nicht, der Verstellweg ist also nicht mit der Fahrt-Bewegung des Fahrzeuges verknüpft, so dass sich das aktive Aktoriksystem von einem Antriebssystem oder einem Bremssystem unterscheidet, die auf den Bewegungszustand der Gesamtheit des Fahrzeuges unmittelbar einwirken.

Vorteilhafterweise wird dadurch erreicht, dass sich mit lediglich einer Anhänger-Kamera unabhängig von dem Fahrzustand des Fahrzeuges auch eine Tiefeninformation bzw. Objekt-Information ermitteln lässt. Dadurch kann auch im Stillstand oder wenn die Fahrzeug-Geschwindigkeit so gering ist, dass aus Odometrie-Daten keine zuverlässige Aussage über die Bewegung zwischen den beiden Standpunkten getroffen werden kann durch Triangulation die Tiefeninformation bzw. in einer Näherung die 3D-Position bzw. die Objektkoordinaten des jeweiligen Objektpunktes ermittelt werden. Dazu ist lediglich eine kontrollierte Ansteuerung des aktiven Aktoriksystems nötig, was unabhängig von der Fahrzeugbewegung ist. Die Verstellung der Kamera über das aktive Aktoriksystem kann aber auch zusätzlich zur Fahrzeugbewegung hinzugezogen werden, um die Anhänger-Kamera für das Structure-from-Motion Verfahren beispielsweise auch in weitere Richtungen verstellen zu können.

Damit ist das Aktoriksystem zur Verstellung der Anhänger-Kamera zwischen den Standpunkten auch nicht nur auf den Stillstand oder niedrige Geschwindigkeiten des Fahrzeuges begrenzt. So kann auch während der Fahrt über das aktive Aktoriksystem eine zusätzliche Verstellung um den Verstellweg erfolgen. Dadurch kann die Ermittlung der Objekt-Information flexibler bzw. in unterschiedlichen Fahrzuständen bzw. Fahrsituationen erfolgen.

Der Verstellweg kann dabei also ergänzend zu der Fahrzeugbewegung (insofern vorhanden) bei der Ermittlung der Tiefeninformation bzw. der Objektkoordinaten herangezogen werden, wenn dieser Verstellweg neben den üblichen Odometrie-Daten, erfindungsgemäß dem Knickwinkel, die den Fahrzustand des Fahrzeuges betreffen, berücksichtigt wird. Dadurch kann die Ermittlung der Objekt-Information bzw. Tiefeninformation exakter und flexibler bzw. in unterschiedlichen Fahrsituationen erfolgen.

Vorzugsweise ist weiterhin vorgesehen, dass als aktives Aktoriksystem ein Kamera-Verstellsystem angesteuert wird, das Stellmotoren und/oder Pneumatikzylinder und/oder Hydraulikzylinder und/oder elektrischen Servozylinder aufweist, wobei die mindestens eine Anhänger-Kamera unmittelbar an dem Kamera-Verstellsystem befestigt ist, so dass die mindestens eine Anhänger-Kamera bei einer Ansteuerung des Kamera-Verstellsystems um den Verstellweg verstellt wird zum Verändern des Standpunktes der mindestens einen Anhänger-Kamera. Damit kann die Anhänger-Kamera gemäß einer Ausführungsform unmittelbar verstellt werden, ohne dabei das Fahrzeug oder Bestandteile des Fahrzeuges mit zu bewegen, wobei das Kamera-Verstellsystem dann entsprechend am Fahrzeug montiert und ausgerichtet ist.

Vorzugsweise ist weiterhin vorgesehen, dass als aktives Aktoriksystem ein aktives Luftfedersystem mit Luftfedern (ECAS) oder ein Fahrwerk-Verstellsystem angesteuert wird, wobei durch eine Ansteuerung des aktiven Luftfedersystems oder des Fahrwerk-Verstellsystems ein Fahrzeugaufbau in seiner Höhe um den Verstellweg verstellt wird, so dass die an dem Fahrzeugaufbau befestigte mindestens eine Anhänger-Kamera mittelbar um den Verstellweg verstellt wird zum Verändern des Standpunktes der mindestens einen Anhänger-Kamera.

Damit kann vorteilhafterweise auf ein Aktoriksystem zurückgegriffen werden, das im Fahrzeug bereits vorhanden ist und somit eine Doppelfunktion erfüllen kann, d.h. beispielsweise ein Anheben und Absenken des Fahrzeugaufbaus zur Luftfederung, Stabilisierung (Wanken, Kippen), etc., bewirken kann und daneben auch die Anhänger-Kamera gezielt in die unterschiedlichen Standpunkte verstellen kann. Das Luftfedersystem bzw. Fahrwerk-Verstellsystem ist dazu lediglich in der entsprechenden Situation anzusteuern, wobei dies in allen Fahrsituationen, insbesondere auch im Stillstand möglich ist. Die Anhänger-Kamera kann in dem Fall frei am Fahrzeugaufbau montiert werden, um sich mit diesem mit zu bewegen.

Vorzugsweise ist weiterhin vorgesehen, dass als aktives Aktoriksystem ein Komponenten-Verstellsystem angesteuert wird, wobei durch eine Ansteuerung des Komponenten-Verstellsystems eine Komponente des Fahrzeuges, beispielsweise eine Aerodynamik-Komponente, um den Verstellweg verstellt wird, so dass die an dieser Komponente befestigte mindestens eine Anhänger-Kamera mittelbar um den Verstellweg verstellt wird zum Verändern des Standpunktes der mindestens einen Anhänger-Kamera.

Damit kann auf ein Aktoriksystem zurückgriffen werden, das nicht den gesamten Fahrzeugaufbau anhebt und absenkt bzw. verstellt, sondern nur einzelne Bestandteile bzw. Komponenten. Derartige Verstellsysteme sind in bestimmten Fahrzeugen bereits vorhanden, so dass diese nicht nachzurüsten sind. Die Anhänger-Kamera ist dann lediglich an dieser Komponente zu befestigen.

Die genannten aktiven Aktoriksysteme können dabei einzeln oder in Kombination miteinander vorgesehen sein, um beispielsweise die Variablität zu erhöhen und kombinierte Verstellungen mit ggf. erweiterten Verstellwegen zu ermöglichen.

Vorzugsweise ist weiterhin vorgesehen, dass die Objektkoordinaten bzw. die Objekt-Information für mehrere Objektpunkte durch Triangulation aus den mindestens zwei Bildern ermittelt wird und aus den mehreren Objektpunkten eine Objektkontur und/oder eine Objektform ermittelt wird. Das Objekt kann dabei vorzugsweise anhand der Objektkontur und/oder der Objektform in Objektklassen unterteilt werden. Dies ermöglicht es in einfacher Weise das Erkennen und Klassifizieren von Objekten, insbesondere auch stillstehende Objekte, z.B. Personen.

Gemäß einer weiteren Ausbildung ist vorgesehen, dass mehrere Anhänger-Kameras vorgesehen sind und mithilfe jeder Anhänger-Kamera unabhängig voneinander Objekt-Informationen zu einem Objekt nach dem beschriebenen Verfahren aus der Basislänge ermittelt werden. Dadurch lässt sich die Tiefeninformation bzw. Objekt-Information vorzugsweise aus mehreren Quellen ermitteln, wodurch die Zuverlässigkeit erhöht wird. Weiterhin wird dadurch auch ermöglicht, die von den mehreren Anhänger-Kameras ermittelten Objekt-Information zu plausibilisieren.

Vorzugsweise ist weiterhin vorgesehen, dass mehr als zwei Bilder an unterschiedlichen Standpunkten aufgenommen werden und aus jedem aufgenommenen Bild Bildpunkte ausgewählt werden, die demselben Objektpunkt des Objektes in der erfassten Umgebung zugeordnet sind, wobei aus den Bildkoordinaten der ausgewählten Bildpunkte durch Triangulation Objektkoordinaten des zugeordneten Objektpunktes unter Annahme einer Basislänge zwischen den jeweiligen Standpunkten der Anhänger-Kamera ermittelt werden. Demnach kann das jeweilige Objekt bzw. der jeweilige Objektpunkt auch zeitlich länger verfolgt werden, um daraus, ggf. durch Bündelausgleich, die Tiefeninformationen bzw. die jeweiligen Objekt-Informationen genauer bzw. robuster zu ermitteln. Dabei können auch mehrere Bildpunkte zu einem oder mehreren Merkmalspunkten zusammengefasst werden und die zeitliche Korrespondenz dieses bzw. dieser Merkmalspunkte(s) zwischen den jeweiligen Bildern durch Triangulation ermittelt werden.

Ergänzend kann vorgesehen sein, dass die ermittelten Objekt-Informationen, die aus einer Verstellung der Anhänger-Kamera um den Verstellweg durch das aktive Aktoriksystem bzw. aus dem Verstellweg als Odometrie-Daten folgen, mit Objekt-Informationen plausibilisiert werden, die aus Odometrie-Daten des Fahrzeuges folgen, die ausgewählt sind aus der Gruppe bestehend aus: Raddrehzahl-Signal und/oder Fahrzeug-Geschwindigkeit und/oder Lenkwinkel und/oder Knickwinkel und/oder Getriebe-Daten, wobei diese insbesondere eine Getriebe-Drehzahl und einen eingelegten Gang beinhalten. Damit können aus unterschiedlichen Bewegungen der Anhänger-Kamera ermittelte Objekt-Informationen zu einem Objekt verglichen werden. Ist beispielsweise die Fahrzeug-Geschwindigkeit sehr gering, so kann die Zuverlässigkeit einer aus Raddrehzahlen und Knickwinkel ermittelten Tiefeninformation nicht mehr sichergestellt werden, beispielsweise bei passiven Raddrehzahlsensoren, so dass ergänzend zur Plausibilisierung die Anhänger-Kamera über das aktive Aktoriksystem um den Verstellweg verstellt werden und daraus die Tiefeninformation gewonnen werden kann.

Erfindungsgemäß ist weiterhin eine Steuereinheit und ein Fahrzeug mit einer derartigen Steuereinheit zur Durchführung der beschriebenen Verfahren vorgesehen, wobei das Fahrzeug mehrteilig ist und mindestens ein Zugfahrzeug und mindestens einen Anhänger aufweist, wobei sich zwischen dem Zugfahrzeug und dem Anhänger ein Knickwinkel ausbildet, wobei mindestens eine Anhänger-Kamera an dem Anhänger angeordnet ist..

Die Erfindung wird im Folgenden anhand eines Ausführungsbeispiels näher erläutert. Es zeigen:
- Fig. 1: eine Fahrsituation eines mehrteiligen Fahrzeuges;
- Fig. 1a: eine Detailansicht des mehrteiligen Fahrzeuges;
- Fig. 2a: ein von der Kamera aufgenommenes Bild;
- Fig. 2b: die Aufnahme eines Objektpunktes mit einer Kamera aus unterschiedlichen Standpunkten; und
- Fig. 3: ein Flussdiagramm des erfindungsgemäßen Verfahrens.

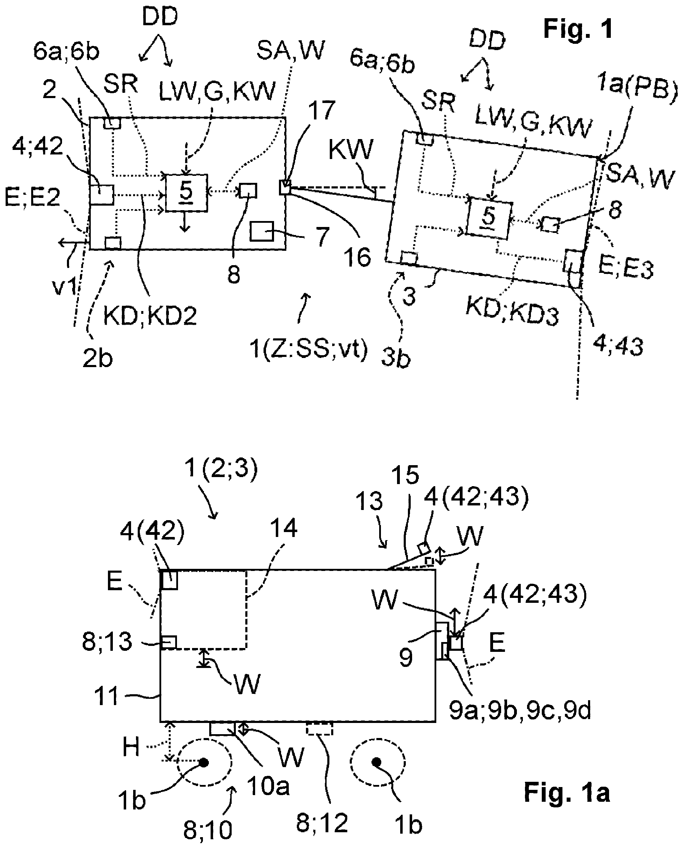

In Figur 1 ist schematisch ein mehrteiliges Fahrzeug 1 aus einem Zugfahrzeug 2 und einem Anhänger 3 dargestellt, wobei gemäß der gezeigten Ausführungsform an beiden Fahrzeugteilen 2, 3 jeweils eine Kamera 4 mit einem Erfassungsbereich E angeordnet ist. An dem Zugfahrzeug 2 ist eine Zugfahrzeug-Kamera 42 mit einem Zugfahrzeug-Erfassungsbereich E2 und an dem Anhänger 3 eine Anhänger-Kamera 43 mit einem Anhänger-Erfassungsbereich E3 angeordnet. Die Kameras 4, 42, 43 geben jeweils Kamera-Daten KD, KD2, KD3 aus.

Das Fahrzeug 1 kann hierbei mehrteilig ausgeführt sein, wie in Fig. 1 abgebildet, beispielsweise als Lastzug mit Lastkraftwagen und Deichselanhänger bzw. Drehschemelanhänger oder als Sattelzug mit Sattelzugmaschine und Sattelauflieger. Grundsätzlich kann das Fahrzeug 1 aber auch nur einteilig sein, wie in Fig. 1a abgebildet. Die Ausrichtung der Kamera 4 wird in Abhängigkeit der jeweiligen Anwendung gewählt.

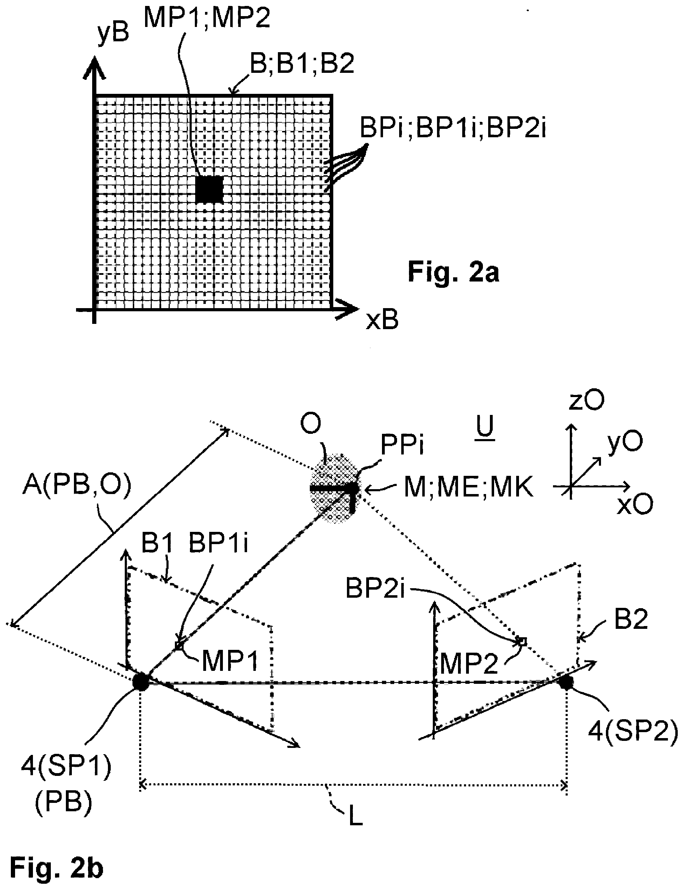

Die jeweiligen Kamera-Daten KD, KD2, KD3 werden in Abhängigkeit einer Umgebung U um das Fahrzeug 1 erzeugt, auf die der jeweilige Erfassungsbereich E, E2, E3 ausgerichtet ist. Aus den Kamera-Daten KD, KD2, KD3 lässt sich jeweils ein Bild B aus Bildpunkten BPi mit Bildkoordinaten xB, yB (s. Fig. 2a) erstellen, wobei jedem Bildpunkt BPi ein Objektpunkt PPi in der Umgebung U zugeordnet ist (s. Fig. 2b). Die Objektpunkte PPi gehören dabei zu Objekten O, die sich in der Umgebung U befinden und denen bestimmte absolute Objektkoordinaten xO, yO, zO im Raum zugeordnet werden können. Je nach Standpunkt SP der jeweiligen Kamera 4, 42, 43 werden Objektpunkte PPi eines Objektes O auf unterschiedlichen Bildpunkten BPi bzw. mit unterschiedlichen Bildkoordinaten xB, yB in den Bildern B abgebildet.

Die Kamera-Daten KD, KD2, KD3 der jeweiligen Kamera 4, 42, 43 werden an eine Steuereinheit 5 übermittelt, die ausgebildet ist, in Abhängigkeit der Kamera-Daten KD, KD2, KD3 sowie in Abhängigkeit von ausgewählten Odometrie-Daten DD des Fahrzeuges 1, die die aktuelle Fahrsituation des Fahrzeuges 1 bzw. der Teilfahrzeuge 2, 3 betreffen und damit auch die Bewegung der Kamera 4 charakterisieren, Objekt-Informationen Ol durch eine dem Fachmann allgemeine bekannte Triangulation T zu ermitteln. Die Objekt-Informationen Ol geben dabei insbesondere räumliche Merkmale des jeweiligen von den Kameras 4, 42, 43 erfassten Objektes O in der Umgebung U an.

Als Objekt-Informationen Ol kommen dazu beispielsweise
- die absoluten Objektkoordinaten xO, yO, zO (Weltkoordinaten) des Objektes O im Raum, und/oder
- ein Abstand A zwischen einem Bezugspunkt PB, beispielsweise einer Rückseite 1a des Fahrzeuges 1 (bei einem einteiligen Fahrzeug 1) bzw. des Anhängers 3 (bei einem mehrteiligen Fahrzeug 1) oder einem aktuellen Standpunkt SP der jeweiligen Kamera 4, 42, 43, und dem erkannten Objekt O bzw. einem Objektpunkt PPi auf dem Objekt O bzw. eine damit zusammenhängende Größe, und/oder
- eine Objektform OF bzw. eine Objektkontur OC, die beispielsweise in n unterschiedliche Objektklassen OKn unterteilt ist, und/oder
- eine Objektdynamik OD, d.h. eine zeitliche Bewegung des erfassten Objektes O im Raum, in Frage.

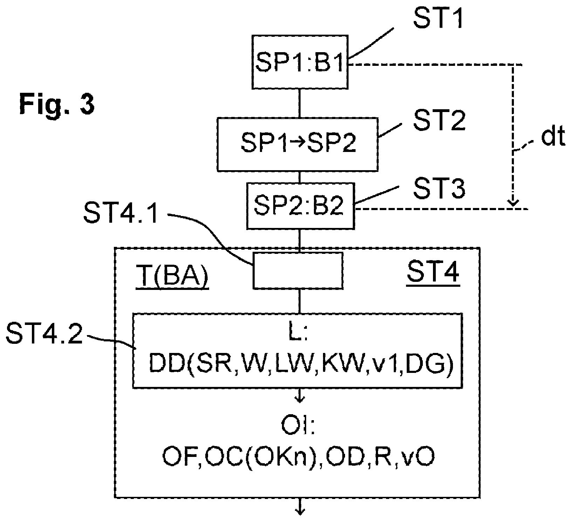

Die Objekt-Informationen Ol werden hierbei gemäß dem Structure-From-Motion (SfM) Verfahren ermittelt, bei dem in Teilschritten ST1, ST2, ST3 (s. Fig. 3) ein Objekt O von einer Kamera 4 von mindestens zwei unterschiedlichen Standpunkten SP1, SP2 aus aufgenommen wird (s. Fig. 2b). Durch Triangulation T können in einem weiteren Schritt ST4 Tiefeninformationen bezüglich des Objektes O bzw. die jeweiligen Objekt-Informationen Ol gewonnen werden. Wie zu Fig. 2b beschrieben, werden dabei Bildkoordinaten xB, yB zu mindestens einem ersten Bildpunkt BP1i im ersten Bild B1 und zu mindestens einem zweiten Bildpunkt BP2i im zweiten Bild B2 bestimmt, die jeweils demselben Objektpunkt PPi zugeordnet sind (ST4.1).

Um den Prozess zu vereinfachen, können eine gewisse Anzahl an Bildpunkten BP1i, BP2i im jeweiligen Bild B1, B2 in einem Merkmalspunkt MP1, MP2 zusammengefasst werden (s. Fig. 2a), wobei die zusammenzufassenden Bildpunkte BP1i, BP2i derartig gewählt werden, dass der jeweilige Merkmalspunkt MP1, MP2 einem bestimmten eindeutig lokalisierbaren Merkmal M an dem Objekt O zugeordnet ist (s. Fig. 2b). Bei dem Merkmal M kann es sich beispielsweise um eine Ecke ME oder eine Kante MK am Objekt O handeln, die aus den gesamten Bildern B1, B2 jeweils extrahiert und deren Bildpunkte BP1i, BP2i in den Merkmalspunkten MP1, MP2 zusammengefasst werden können.

In einer Näherung kann aus den Bildkoordinaten xB, yB der einzelnen Bildpunkte BP1i, BP2i bzw. der Merkmalspunkte MP1, MP2, die in den mindestens zwei Bildern B1, B2 dem- oder denselben Objektpunkten PPi bzw. Merkmal M zugeordnet sind, durch Triangulation T eine Objektform OF oder eine Objektkontur OC zumindest abgeschätzt werden. Dazu können die Bildkoordinaten xB, yB mehrerer Bildpunkte BP1i, BP2i bzw. mehrerer Merkmalspunkte MP1, MP2 einer Triangulation T unterzogen werden, um Objektkoordinaten xO, yO, zO zu erhalten, die jedoch nicht zwangsläufig auf dem Objekt O im Raum liegen.

Ohne die Kenntnis einer exakten Basislänge L, d.h. einem Abstand zwischen den unterschiedlichen Standpunkten SP1, SP2 der Kamera 4, ergeben sich durch die Triangulation T nämlich Objektkoordinaten xO, yO, zO in unskalierter Form. Damit lässt sich aus derartig ermittelten Objektkoordinaten xO, yO, zO auch lediglich eine unskalierte Objektform OF bzw. Objektkontur OC herleiten, was aber für die Ermittlung der Form bzw. der Kontur ausreichend ist. Für die Triangulation T kann dabei zunächst eine beliebige Basislänge L angenommen werden.

Um durch Triangulation T eine Ermittlung von den weiteren o.g. Objekt-Informationen Ol zu ermöglichen, wird ergänzend die tatsächliche Basislänge L herangezogen. Sind gemäß Fig. 2b die relativen Positionen und damit die Basislänge L zwischen den unterschiedlichen Standpunkten SP1, SP2 der Kamera 4, an denen die beiden Bilder B1, B2 aufgenommen wurden, bekannt bzw. wurden diese ermittelt, so können durch Triangulation T auch die absoluten Objektkoordinaten xO, yO, zO (Weltkoordinaten) des Objektes O bzw. des Objektpunkts PPi bzw. des Merkmals M ermittelt werden. Daraus kann wiederum der Abstand A zwischen dem Bezugspunkt PB und dem erkannten Objekt O bzw. einem Objektpunkt PPi auf dem Objekt O ermittelt werden, wobei die Koordinaten des Bezugspunktes PB in den Weltkoordinaten unmittelbar aus geometrischen Betrachtungen folgen.

Auf diese Weise kann von der Steuereinrichtung 5 eine gegenüber dem obigen Fall skalierte Objektkontur OC bzw. skalierte Objektform PF abgeschätzt werden, wenn die exakten Objektkoordinaten xO, yO, zO von mehreren Objektpunkten PPi bzw. Merkmalen M ermittelt wird. Aus der Objektkontur OC wiederum kann eine Klassifizierung des Objektes O in eine bestimmte Objektklasse OKn erfolgen. Dabei kann auch die Objektdynamik OD berücksichtigt werden, beispielsweise eine Bewegungsrichtung R des oder der Objektpunkte PPi und/oder eine Objekt-Geschwindigkeit vO, wenn die Objekt-punkte PPi zeitlich aufgelöst betrachtet werden.

Beispielsweise können als Personen erkannten Objekte O in einer ersten Objektklasse OK1 eingeordnet werden. In einer zweiten Objektklasse OK2 können als feststehend erkannte Objekte O, beispielsweise Schilder, Laderampen, Häuser, etc. eingeordnet werden. In eine dritte Objektklasse OK3 können als sich bewegend erkannte Objekte O, beispielsweise andere Fahrzeuge, eingeordnet werden.

Um die ermittelten Objekt-Informationen Ol noch genauer zu ermitteln, kann ergänzend vorgesehen sein, dass mehr als zwei Bilder B1, B2 aufgenommen und durch Triangulation T wie oben beschrieben ausgewertet werden, und/oder ergänzend eine Bündelausgleichung BA durchgeführt wird.

Wie bereits beschrieben, ist das Objekt O für das SfM-Verfahren aus mindestens zwei unterschiedlichen Standpunkten SP1, SP2 von der Kamera 4 zu betrachten, wie schematisch in Fig. 2b dargestellt. Dazu ist die Kamera 4 in dem Teilschritt ST2 kontrolliert in die unterschiedlichen Standpunkte SP1, SP2 zu bringen und im skalierten Fall anhand von Odometrie-Daten DD zu ermitteln, welche Basislänge L sich zwischen den Standpunkten SP1, SP2 aus dieser Bewegung ergibt (ST4, ST4.2). Dazu können unterschiedliche Methoden zur Anwendung kommen:
Ist das gesamte Fahrzeug 1 in Bewegung, so ergibt sich bereits daraus eine Bewegung der Kamera 4. Darunter ist zu verstehen, dass das Fahrzeug 1 in seiner Gesamtheit aktiv, beispielsweise durch ein Antriebssystem 7, oder passiv, beispielsweise durch ein Gefälle, in Bewegung versetzt wird. Werden während dieser Bewegung von der Kamera 4 mindestens zwei Bilder B1, B2 innerhalb eines zeitlichen Versatzes dt aufgenommen, lässt sich mithilfe von Odometrie-Daten DD, aus denen sich die Fahrzeugbewegung und damit auch die Kamerabewegung ableiten lässt, die Basislänge L ermitteln. Durch Odometrie werden also die beiden den Bildern B1, B2 zugeordneten Standpunkte SP1, SP2 ermittelt.

Als Odometrie-Daten DD können beispielsweise Raddrehzahl-Signale SR von aktiven und/oder passiven Raddrehzahlsensoren 6a, 6p an den Rädern des Fahrzeuges 1 (s. Fig. 1) verwendet werden. Aus diesen kann in Abhängigkeit des zeitlichen Versatzes dt ermittelt werden, wie weit sich das Fahrzeug 1 bzw. die Kamera 4 zwischen den Standpunkten SP1, SP2 bewegt hat, woraus die Basislänge L folgt. Es ist aber nicht zwangsläufig nur auf die Fahrzeug-Odometrie zurückzugreifen, d.h. die Bewertung der Fahrzeugbewegung anhand von Bewegungssensoren am Fahrzeug 1. Ergänzend oder alternativ kann auch auf eine visuelle Odometrie zurückgegriffen werden. Bei der visuellen Odometrie kann aus den Kamera-Daten KD der Kamera 4 bzw. aus Informationen in den erfassten Bildern B; B1, B2 eine Kameraposition fortlaufend ermittelt werden, insofern zumindest zu Beginn z.B. Objektkoordinaten xO, yO, zO eines bestimmten Objektpunktes PPi bekannt sind. Die Odometrie-Daten DD können also auch eine Abhängigkeit von der derartig ermittelten Kameraposition enthalten, da daraus die Fahrzeugbewegung zwischen den beiden Standpunkten SP1, SP2 bzw. unmittelbar auch die Basislänge L abgeleitet werden kann.

Um die odometrische Bestimmung der Basislänge L bei einer Bewegung des Fahrzeuges 1 genauer zu machen, kann auf weitere im Fahrzeug 1 verfügbare Odometrie-Daten DD zurückgegriffen werden. Beispielsweise kann auf einen Lenkwinkel LW und/oder eine Gierrate G zurückgegriffen werden, um auch die Drehbewegung des Fahrzeuges 1 zu berücksichtigen.

Im erfindungsgemäßen Fall wird bei einem zwei- oder mehrteiligen Fahrzeug 1, bei dem eine Triangulation T anhand der von der Anhänger-Kamera 43 aufgenommenen Bilder B durchgeführt werden soll, ergänzend auf einen Knickwinkel KW zwischen dem Zugfahrzeug 2 und dem Anhänger 3 zurückgegriffen, um die exakte Dynamik des Anhängers 3 zu berücksichtigen, insbesondere bei Rangiervorgängen oder Kurvenfahrten. Um die einzelnen Standpunkte SP1, SP2 der Anhänger-Kamera 43 bzw. die Basislänge L exakt zu ermitteln, wird also auch berücksichtigt, wie sich der Anhänger innerhalb des Zeitraums dt gegenüber dem Zugfahrzeug 2 bewegt hat.

Dabei ist vorzugsweise vorgesehen, den Knickwinkel KW über einen aktiven Knickwinkelsensor 16 zu messen, der an einem Ankuppelpunkt 17 angeordnet ist. Die beiden Fahrzeugteile 2, 3 verschwenken dabei um diesen Ankuppelpunkt 17 umeinander. Bei einem Sattelzug liegt dieser Ankuppelpunkt 17 beispielsweise im Kingpin/Königszapfen. Bei einem Deichselanhänger entsprechend an der Anhängerkupplung am Zugfahrzeug 2. Neben einer aktiven Messung des Knickwinkels KW ist aber auch eine Ermittlung des Knickwinkels KW aus den Bildern B einer Kamera 4 möglich, beispielsweise einer rückwärtsschauenden Zugfahrzeug-Kamera 42 und/oder einer vorwärtsschauenden Anhänger-Kamera 43.

Ein auf derartige Weise oder andersartig ermittelter Knickwinkel KW kann dann in den Odometrie-Daten DD berücksichtigt werden, um die Basislänge L für die Triangulation T zu erhalten, so dass das Extrahieren der Tiefeninformation des jeweils von der Anhänger-Kamera 43 erfassten Objektes O genauer erfolgen kann.

Befindet sich das einteilige Fahrzeug 1 oder das mehrteilige Fahrzeug 1 mit seinen Fahrzeugteilen 2, 3 nicht in Bewegung oder ist die Bewegung innerhalb des zeitlichen Versatzes dt so gering, dass die Odometrie-Daten DD so ungenau sind, dass eine zuverlässige Ermittlung der Basislänge L damit nicht möglich ist, kann die Kamera 4 im Teilschritt ST2 auch durch ein aktives Aktoriksystem 8 in Bewegung versetzt werden. Die Bewegung der Kamera 4, die durch das Aktoriksystem 8 bewirkt wird, unterscheidet sich von der bisher betrachteten Bewegung des Fahrzeuges 1 insbesondere dadurch, dass durch das Aktoriksystem 8 lediglich die Kamera 4 oder ein mit der Kamera 4 verbundener Fahrzeugabschnitt in Bewegung versetzt wird. Die Bewegung des Fahrzeuges 1 in seiner Gesamtheit bzw. ein Fahrzustand Z des Fahrzeuges 1 werden dadurch also nicht verändert, so dass ein stillstehendes Fahrzeug 1 bei einer aktiven Ansteuerung des Aktoriksystems 8 weiterhin im Stillstand SS verbleibt.

Das Aktoriksystem 8 wird von der Steuereinheit 5 über Aktorik-Signale SA angesteuert. Dies kann beispielsweise dann geschehen, wenn die Steuereinheit 5 erkennt, dass die Odometrie-Daten DD, die die Bewegung des gesamten Fahrzeuges 1 charakterisieren, d.h. die Raddrehzahl-Signale SR und/oder der Lenkwinkel LW und/oder die Gierrate G und/oder die Kamera-Daten KD und/oder Getriebe-Daten DG, die aus einer Getriebedrehzahl und einem eingelegten Gang die Abschätzung einer Fahrzeug-Geschwindigkeit v1 ermöglichen, nicht genau bzw. detailliert genug sind, um die Basislänge L zu ermitteln. Dies kann dann der Fall sein, wenn der Stillstand SS des Fahrzeuges 1 erkannt wurde oder eine Fahrzeug-Geschwindigkeit v1, die geringer ist als ein Geschwindigkeits-Grenzwert vt, vorliegt.

Bei einer Ansteuerung des Aktoriksystems 8 wird die Kamera 4 unmittelbar oder mittelbar bewegt und dadurch an unterschiedliche Standpunkte SP1, SP2 gebracht, so dass die Umgebung U in mindestens zwei unterschiedlichen Bildern B1, B2 abgebildet werden kann. Damit kann das SfM-Verfahren wie oben beschrieben ausgeführt werden. Um dabei die Basislänge L zu ermitteln, greift die Steuereinheit 5 auf einen Verstellweg W zurück, um den die Kamera 4 von dem Aktoriksystem 8 zwischen den beiden Standpunkten SP1, SP2 verstellt wird. Der Verstellweg W wird vom Aktoriksystem 8 an die Steuereinheit 5 übermittelt. Die Steuereinheit 5 kann den Verstellweg W der Aktorikeinheit 8 also ergänzend in den Odometrie-Daten DD berücksichtigen, um die Basislänge L zu ermitteln.

Als Aktoriksysteme 8 kommen unterschiedliche Systeme im Fahrzeug 1 in Betracht, die in Fig. 1a beispielhaft schematisch für ein einteiliges Fahrzeug 1 dargestellt sind, die aber an Teilfahrzeugen 2, 3 von mehrteiligen Fahrzeugen 1 ebenso zum Einsatz kommen können. Beispielsweise kann die Kamera 4 an einem Kamera-Verstellsystem 9 mit einem oder mehreren Stellmotor(en) 9a oder Pneumatikzylinder(n) 9b oder Hydraulikzylinder(n) 9c oder elektrischen Servozylinder(n) 9d oder vergleichbar wirkende Aktoren angeordnet sein, wobei das Kamera-Verstellsystem 9 so am Fahrzeug 1 befestigt ist, dass der Erfassungsbereich E wie gewünscht ausgerichtet ist. In dem Fall kann die Kamera 4 in die unterschiedlichen Standpunkte SP1, SP2 gebracht werden, indem der oder die Stellmotor(en) 9a, Pneumatikzylinder 9b, Hydraulikzylinder 9c, Servozylinder(n) 9d bei Betätigung um einen bestimmten Verstellweg W verstellt werden.

Eine weitere Möglichkeit für ein aktives Aktoriksystem 8 ist ein aktives Luftfedersystem 10 (ECAS, Electronically Controlled Air Suspension), das in einem einteiligen Fahrzeug 1 bzw. bei einem mehrteiligen Fahrzeug 1 in einem Zugfahrzeug 2 bzw. auch in einem Anhänger 3, über als Federbälge ausgeführte Luftfedern 10a dafür sorgt, dass ein Fahrzeugaufbau 11 gegenüber den Fahrzeugachsen 1b, 2b, 3b des Fahrzeuges 1 bzw. des Zugfahrzeuges 2 bzw. des Anhängers 3 in einer Höhe H verstellt, d.h. angehoben oder abgesenkt werden kann. Dazu kann ein Druck in den Luftfedern 10a gezielt angepasst werden. Dies kann dazu verwendet werden, eine optimale Federung unabhängig vom Straßenzustand oder vom Beladungszustand zu erreichen, eine Veränderung der Achslastverteilung dynamisch zu kompensieren, ein Wanken oder Nicken während einer Kurvenfahrt zu vermeiden oder die Höhe H des Fahrzeugaufbaus 11 bei einem Ankuppelvorgang eines Zugfahrzeuges 2 an einen Anhänger 3 sowie bei Be- und Entladevorgängen, beispielsweise an einer Laderampe, anzupassen.

Ist die jeweilige Kamera 4, 4a, 4b an dem Fahrzeugaufbau 11 des Fahrzeuges 1 bzw. des Zugfahrzeuges 2 bzw. des Anhängers 3 angeordnet, so kann durch eine gezielte Ansteuerung des aktiven Luftfedersystems 10 durch die Steuereinheit 5 eine Verstellung der Kamera 4 vorzugsweise in der Höhe H um einen Verstellweg W bewirkt werden, um diese an zwei unterschiedlichen Standpunkten SP1, SP2 zu positionieren. Da dem aktiven Luftfedersystem 10 der Verstellweg W bekannt ist und/oder dieser gemessen werden kann, kann dieser auch der Steuereinheit 5 übermittelt werden, so dass diese den von dem aktiven Luftfedersystem 10 bewirkten Verstellweg W in den Odometrie-Daten DD berücksichtigen kann, um die Basisläge L zu ermitteln.

Auf diese Weise kann die Steuereinheit 5 im Stillstand SS des Fahrzeuges 1 eine Verstellung der jeweiligen Kamera 4 über das aktive Luftfedersystem 10 anweisen, so dass auch darüber in einem SfM-Verfahren durch Triangulation T die jeweilige Objekt-Informationen Ol zu mindestens einem Objektpunkt PPi ermittelt werden kann. Grundsätzlich kann die Steuereinheit 5 dabei auch bereits den Verstellweg W als Soll-Wert vorgeben, den das aktive Luftfedersystem 10 durch Veränderung des Druckes in den Luftfedern 10a einstellen soll. Um die Objektform OF oder die Objektkontur OC unskaliert durch Triangulation T zu ermitteln, kann der Verstellweg W (bzw. die Basislänge L) aber auch unberücksichtigt bleiben, beispielsweise wenn der Verstellweg W nicht gemessen wird oder werden kann.

Neben einem aktiven Luftfedersystem 10 kann als weiteres aktives Aktoriksystem 8 aber auch jedes vergleichbar wirkende aktive Fahrwerk-Verstellsystem 12 verwendet werden, das in der Lage ist, die Höhe H des Fahrzeugaufbaus 11 anzupassen und damit die daran angeordnete Kamera 4 gezielt an zwei unterschiedlichen Standpunkten SP1, SP2 zu positionieren. Als aktives Aktoriksystem 8 ist aber auch ein Komponenten-Verstellsystem 13 möglich, das lediglich einen Teil bzw. eine Komponente des Fahrzeugaufbaus 11, an dem die Kamera 4 befestigt ist, beispielsweise ein Führerhaus 14, um den Verstellweg W anheben oder absenken kann. Als weitere Komponenten kommen beispielsweise auch Aerodynamik-Komponenten 15, beispielsweise Aerodynamik-Flügel oder Spoiler in Betracht, an denen eine Kamera 4 montiert werden kann und die aktiv verstellt werden können, um die Kamera 4 um einen Verstellweg W gezielt zu verstellen.

Damit gibt es eine Reihe von Möglichkeiten, die Kamera 4 aktiv und gezielt an unterschiedlichen Standpunkten SP1, SP2 zu positionieren, um zwei Bilder B1, B2 von einem Objekt O aufzunehmen und daraus die jeweilige Objekt-Information Ol (skaliert oder unskaliert) für ein oder mehrere Objekt-punkte PPi zu ermitteln. Grundsätzlich kann der Verstellweg W, der über das aktive Aktoriksystem 8 induziert wird, auch mit den Odometrie-Daten DD, die sich aus der Fahrzeugbewegung ergeben, beispielsweise dem Knickwinkel KW, kombiniert werden. Das aktive Aktoriksystem 8 kann dazu beispielsweise auch während der Fahrt angesteuert werden, um eine zusätzliche Bewegung der Kamera 4 zu erzeugen.

### Bezugszeichenliste (Teil der Beschreibung)

- 1: Fahrzeug
- 1a: Rückseite des Fahrzeuges 1
- 1b: Fahrzeugachse des Fahrzeuges 1
- 2: Zugfahrzeug
- 2b: Fahrzeugachse des Zugfahrzeuges 2
- 3: Anhänger
- 3b: Fahrzeugachse des Anhängers 3
- 4: Kamera
- 42: Zugfahrzeug-Kamera
- 43: Anhänger-Kamera
- 5: Steuereinheit
- 6a: aktiver Raddrehzahlsensor
- 6p: passiver Raddrehzahlsensor
- 7: Antriebssystem
- 8: aktives Aktoriksystem
- 9: Kamera-Verstellsystem
- 9a: Stellmotor
- 9b: Pneumatikzylinder
- 9c: Hydraulikzylinder
- 9d: elektrischer Servozylinder
- 10: aktives Luftfedersystem (ECAS)
- 10a: Luftfedern
- 11: Fahrzeugaufbau
- 12: Fahrwerk-Verstellsystem
- 13: Komponenten-Verstellsystem
- 14: Führerhaus
- 15: Aerodynamik-Komponente
- 16: aktiver Knickwinkelsensor
- 17: Ankuppelpunkt
- A: Abstand
- B: Bild
- B1: erstes Bild
- B2: zweites Bild
- BA: Bündelausgleich
- BPi: Bildpunkte
- BP1i: erster Bildpunkt
- BP2i: zweiter Bildpunkt
- DD: Odometrie-Daten
- DG: Getriebe-Daten
- dt: zeitlicher Versatz
- E: Erfassungsbereich der Kamera
- E2: erster Erfassungsbereich der Zugfahrzeug-Kamera
- E3: zweiter Erfassungsbereich der Anhänger-Kamera
- G: Gierrate
- H: Höhe des Fahrzeugaufbaus
- KD: Kamera-Daten der Kamera
- KD2: erste Kamera-Daten der Zugfahrzeug-Kamera
- KD3: zweite Kamera-Daten der Anhänger-Kamera
- L: Basislänge
- LW: Lenkwinkel
- M: Merkmal
- MP1, MP2: Merkmalspunkt
- ME: Ecke (als Merkmal)
- MK: Kante (als Merkmal)
- O: Objekt
- OC: Objektkontur
- OD: Objektdynamik
- OF: Objektform
- Ol: Objekt-Informationen
- OKn: n. Objektklasse
- PB: Bezugspunkt
- PPi: Objektpunkt
- R: Bewegungsrichtung
- SA: Aktorik-Signal
- SP: Standpunkt der Kamera 4
- SP1: erster Standpunkt der Kamera
- SP2: zweiter Standpunkt der Kamera
- SR: Raddrehzahl-Signale
- SS: Stillstand
- T: Triangulation
- U: Umgebung um das Fahrzeug 1
- v1: Fahrzeug-Geschwindigkeit
- vO: Objekt-Geschwindigkeit
- vt: Geschwindigkeits-Grenzwert
- W: Verstellweg
- Z: Fahrzustand

## Patentansprüche

1. Verfahren zum Ermitteln einer Objekt-Information (Ol) eines Objektes (O) in einer Umgebung (U) eines mehrteiligen Fahrzeuges (1) aus zumindest einem Zugfahrzeug (2) und zumindest einem Anhänger (3), wobei zumindest an dem Anhänger (3) mindestens eine Anhänger-Kamera (43) angeordnet ist, mit mindestens den folgenden Schritten:
- Erfassen der Umgebung (U) mit der mindestens einen Anhänger-Kamera (43) von einem ersten Standpunkt (SP1) aus und in Abhängigkeit davon Erstellen eines ersten Bildes (B1) bestehend aus ersten Bildpunkten (BP1i) (ST1);
- Verändern des Standpunktes (SP) der mindestens einen Anhänger-Kamera (43) (ST2);
- Erfassen der Umgebung (U) mit der mindestens einen Anhänger-Kamera (43) von einem zweiten Standpunkt (SP2) aus und in Abhängigkeit davon Erstellen eines zweiten Bildes (B2) bestehend aus zweiten Bildpunkten (BP2i) (ST3);
- Ermitteln einer Objekt-Informationen (Ol) zu einem Objekt (O) in der erfassten Umgebung (U) (ST4) durch
- Auswählen von mindestens einem ersten Bildpunkt (BP1i) in dem ersten Bild (B1) und mindestens einem zweiten Bildpunkt (BP2i) in dem zweiten Bild (B2), wobei der erste Bildpunkt (BP1i) und der zweite Bildpunkt (BP2i) derartig ausgewählt werden, dass diese demselben Objektpunkt (PPi) des Objektes (O) in der erfassten Umgebung (U) zugeordnet sind (ST4.1), und
- Bestimmen von Objektkoordinaten (xO, yO, zO) des zugeordneten Objektpunktes (PPi) aus ersten Bildkoordinaten (xB, yB) des mindestens einen ersten Bildpunktes (BP1i) und zweiten Bildkoordinaten (xB, yB) des mindestens einen zweiten Bildpunktes (BP2i) durch Triangulation (T) unter Annahme einer Basislänge (L) zwischen den beiden Standpunkten (SP1, SP2) der Anhänger-Kamera (43), wobei die Basislänge (L) zwischen den beiden Standpunkten (SP1, SP2) in Abhängigkeit von Odometrie-Daten (DD) des Fahrzeuges (1) ermittelt wird, wobei die Odometrie-Daten (DD) eine Verstellung der Anhänger-Kamera (43) zwischen den beiden Standpunkten (SP1, SP2) charakterisieren, wobei die Odometrie-Daten (DD) einen Knickwinkel (KW) zwischen dem mindestens einen Anhänger (3) und dem mindestens einen Zugfahrzeug (2) enthalten und/oder abhängig von dem Knickwinkel (KW) sind, um die Genauigkeit der Bestimmung der Basislänge (L) zwischen den beiden Standpunkten der Anhänger-Kamera (43) zu erhöhen.

2. Verfahren nach Anspruch 1, **dadurch gekennzeichnet, dass** der Knickwinkel (KW)
- über einen aktiven Knickwinkelsensor (16) an einem Ankuppelpunkt (17) zwischen dem mindestens einen Zugfahrzeug (2) und dem mindestens einen Anhänger (3) und/oder
- in Abhängigkeit von erfassten Bildern (B) einer Kamera (4) am Zugfahrzeug (2) und/oder am Anhänger (3) ermittelt wird.

3. Verfahren nach Anspruch 1 oder 2, **dadurch gekennzeichnet, dass** die Odometrie-Daten (DD) weiterhin abhängig von einem Verstellweg (W) erzeugt werden, wobei die mindestens eine Anhänger-Kamera (43) durch Ansteuern eines aktiven Aktoriksystems (8) am Anhänger (8) um den Verstellweg (W) verstellt wird, ohne dabei einen Fahrzustand (Z) des Fahrzeuges (1) zu verändern.

4. Verfahren nach Anspruch 3, **dadurch gekennzeichnet, dass** als aktives Aktoriksystem (8) ein Kamera-Verstellsystem (9) angesteuert wird, das Stellmotoren (9a) und/oder Pneumatikzylinder (9b) und/oder Hydraulikzylinder (9c) und/oder elektrische Servorzylinder (9d) aufweist, wobei die mindestens eine Anhänger-Kamera (43) unmittelbar an dem Kamera-Verstellsystem (9) befestigt ist, so dass die mindestens eine Anhänger-Kamera (43) bei einer Ansteuerung des Kamera-Verstellsystems (9) um den Verstellweg (W) verstellt wird zum Verändern des Standpunktes (SP) der mindestens eine Anhänger-Kamera (43) und/oder
dass als aktives Aktoriksystem (8) ein aktives Luftfedersystem (10) mit Luftfedern (10a) oder ein Fahrwerk-Verstellsystem (12) angesteuert wird, wobei durch eine Ansteuerung des aktiven Luftfedersystems (10) oder des Fahrwerk-Verstellsystems (12) ein Fahrzeugaufbau (11) des Anhängers (3) in seiner Höhe (H) um den Verstellweg (W) verstellt wird, so dass die an dem Fahrzeugaufbau (11) des Anhängers (3) befestigte mindestens eine Anhänger-Kamera (43) mittelbar um den Verstellweg (W) verstellt wird zum Verändern des Standpunktes (SP) der mindestens einen Anhänger-Kamera (43) und/oder
dass als aktives Aktoriksystem (8) ein Komponenten-Verstellsystem (13) angesteuert wird, wobei durch eine Ansteuerung des Komponenten-Verstellsystems (13) eine Komponente des Anhängers (3), beispielsweise eine Aerodynamik-Komponente (15), um den Verstellweg (W) verstellt wird, so dass die an dieser Komponente befestigte mindestens eine Anhänger-Kamera (43) mittelbar um den Verstellweg (W) verstellt wird zum Verändern des Standpunktes (SP) der mindestens eine Anhänger-Kamera (43).

5. Verfahren nach Anspruch 3 oder 4, **dadurch gekennzeichnet, dass** die ermittelten Objekt-Informationen (Ol), die aus einer Verstellung der Anhänger-Kamera (43) um den Verstellweg (W) durch das aktive Aktoriksystem (8) folgen, mit Objekt-Informationen (Ol) plausibilisiert werden, die aus den Odometrie-Daten (DD) des Fahrzeuges (1) folgen, die ausgewählt sind aus der Gruppe bestehend aus: Raddrehzahl-Signal (SR) und/oder Fahrzeug-Geschwindigkeit (v1) und/oder Lenkwinkel (LW) und/oder Knickwinkel (KW) und/oder Getriebe-Daten (DG).

6. Verfahren nach einem der vorhergehenden Ansprüche, **dadurch gekennzeichnet, dass** die Objektkoordinaten (xO, yO, zO) für mehrere Objektpunkte (PPi) durch Triangulation (T) aus den mindestens zwei Bildern (B1, B2) ermittelt wird und aus den mehreren Objektpunkten (PPi) eine Objektkontur (OC) und/oder eine Objektform (OF) ermittelt wird.

7. Verfahren nach Anspruch 6, **dadurch gekennzeichnet, dass** das Objekt (O) anhand der Objektkontur (OC) und/oder der Objektform (OF) in Objektklassen (OKi) unterteilt wird.

8. Verfahren nach einem der vorhergehenden Ansprüche, **dadurch gekennzeichnet, dass** mehrere Anhänger-Kameras (43) vorgesehen sind und mithilfe jeder Anhänger-Kamera (43) unabhängig voneinander Objekt-Informationen (Ol) zu einem Objekt (O) ermittelt werden.

9. Verfahren nach Anspruch 8, **dadurch gekennzeichnet, dass** die von den mehreren Anhänger-Kameras (43) ermittelten Objekt-Information (Ol) plausibilisiert werden.

10. Verfahren nach einem der vorhergehenden Ansprüche, **dadurch gekennzeichnet, dass** mehr als zwei Bilder (B) an unterschiedlichen Standpunkten (SP) aufgenommen werden und aus jedem aufgenommenen Bild (B) Bildpunkte (BPi) ausgewählt werden, die demselben Objektpunkt (PPi) des Objektes (O) in der erfassten Umgebung (U) zugeordnet sind, wobei aus den Bildkoordinaten (xB, yB) der ausgewählten Bildpunkte (BPi) durch Triangulation (T) Objektkoordinaten (xO, yO, zO) des zugeordneten Objektpunktes (PPi) unter Annahme einer Basislänge (L) zwischen den jeweiligen Standpunkten (SP) der Anhänger-Kamera (43) ermittelt werden.

11. Verfahren nach einem der vorherigen Ansprüche, **dadurch gekennzeichnet, dass** anhand der mindestens zwei aufgenommenen Bilder (B1, B2) ein Bündelausgleich (BA) durchgeführt wird.

12. Verfahren nach einem der vorhergehenden Ansprüche, **dadurch gekennzeichnet, dass** mehrere erste Bildpunkte (BP1i) in dem ersten Bild (B1) in einem ersten Merkmalspunkt (MP1) und mehrere zweite Bildpunkte (BP2i) in dem zweiten Bild (B2) zu einem zweiten Merkmalspunkt (MP2) zusammengefasst werden, wobei der erste Merkmalspunkt (MP1) und der zweite Merkmalspunkt (MP2) derartig ausgewählt werden, dass diese demselben Merkmal (M) des Objektes (O) in der erfassten Umgebung (U) zugeordnet sind,
wobei Objektkoordinaten (xO, yO, zO) des zugeordneten Merkmals (M) aus ersten Bildkoordinaten (xB, yB) des ersten Merkmalspunktes (MP1) und zweiten Bildkoordinaten (xB, yB) des zweiten Merkmalspunktes (MP2) durch Triangulation (T) unter Annahme einer Basislänge (L) zwischen den beiden Standpunkten (SP1, SP2) der Anhänger-Kamera (43) ermittelt werden.

13. Steuereinheit (5) zur Durchführung eines Verfahrens nach einem der vorhergehenden Ansprüche.

14. Fahrzeug (1) mit einer Steuereinheit (5) nach Anspruch 13, wobei das Fahrzeug (1) mehrteilig ist und mindestens ein Zugfahrzeug (2) und mindestens einen Anhänger (3) aufweist, wobei sich zwischen dem Zugfahrzeug (2) und dem Anhänger (3) ein Knickwinkel (KW) ausbildet, wobei mindestens eine Anhänger-Kamera (43) an dem Anhänger (3) angeordnet ist.

## Claims

1. Method for ascertaining an object information item (Ol) relating to an object (O) in an environment (U) of a multi-part vehicle (1) made up of at least one towing vehicle (2) and at least one trailer (3), wherein at least one trailer camera (43) is arranged at least on the trailer (3), the method comprising at least the following steps:
- capturing the environment (U) from a first viewpoint (SP1) using the at least one trailer camera (43) and, on the basis thereof, creating a first image (B1) consisting of first image points (BP1i) (ST1);
- changing the viewpoint (SP) of the at least one trailer camera (43) (ST2);
- capturing the environment (U) from a second viewpoint (SP2) using the at least one trailer camera (43) and, on the basis thereof, creating a second image (B2) consisting of second image points (BP2i) (ST3);
- ascertaining an object information item (Ol) relating to an object (O) in the captured environment (U) (ST4) by
- selecting at least one first image point (BP1i) in the first image (B1) and at least one second image point (BP2i) in the second image (B2), wherein the first image point (BP1i) and the second image point (BP2i) are selected in such a way that they are assigned to the same object point (PPi) of the object (O) in the captured environment (U) (ST4.1), and
- determining object coordinates (xO, yO, zO) of the assigned object point (PPi) from first image coordinates (xB, yB) of the at least one first image point (BP1i) and second image coordinates (xB, yB) of the at least one second image point (BP2i) by triangulation (T) assuming a base length (L) between the two viewpoints (SP1, SP2) of the trailer camera (43), wherein the base length (L) between the two viewpoints (SP1, SP2) is ascertained on the basis of odometry data (DD) of the vehicle (1), wherein the odometry data (DD) characterize an adjustment of the trailer camera (43) between the two viewpoints (SP1, SP2),
wherein the odometry data (DD) contain an articulation angle (KW) between the at least one trailer (3) and the at least one towing vehicle (2) and/or are dependent on the articulation angle (KW), in order to increase the accuracy of determining the base length (L) between the two viewpoints of the trailer camera (43).

2. Method according to claim 1, **characterized in that** the articulation angle (KW) is ascertained
- via an active articulation angle sensor (16) at a coupling point (17) between the at least one towing vehicle (2) and the at least one trailer (3), and/or
- on the basis of images (B) captured by a camera (4) on the towing vehicle (2) and/or on the trailer (3).

3. Method according to claim 1 or 2, **characterized in that** the odometry data (DD) are generated furthermore on the basis of an adjustment distance (W), the at least one trailer camera (43) being adjusted by the adjustment distance (W) as a result of controlling an active actuator system (8) on the trailer (8) without changing a driving state (Z) of the vehicle (1).

4. Method according to claim 3, **characterized in that** as an active actuator system (8) a camera adjustment system (9) having servomotors (9a) and/or pneumatic cylinders (9b) and/or hydraulic cylinders (9c) and/or electric servo cylinders (9d) is controlled, the at least one trailer camera (43) being directly attached to the camera adjustment system (9), with the result that when the camera adjustment system (9) is controlled, the at least one trailer camera (43) is adjusted by the adjustment distance (W) in order to change the viewpoint (SP) of the at least one trailer camera (43), and/or
**in that** as an active actuator system (8) either an active pneumatic suspension system (10) with pneumatic springs (10a) or a chassis adjustment system (12) is controlled, a vehicle body (11) of the trailer (3) being adjusted in terms of its height (H) by the adjustment distance (W) as a result of controlling the active pneumatic suspension system (10) or the chassis adjustment system (12), with the result that the at least one trailer camera (43) attached to the vehicle body (11) of the trailer (3) is indirectly adjusted by the adjustment distance (W) in order to change the viewpoint (SP) of the at least one trailer camera (43), and/or
**in that** as an active actuator system (8) a component adjustment system (13) is controlled, a component of the trailer (3), for example an aerodynamics component (15), being adjusted by the adjustment distance (W) as a result of controlling the component adjustment system (13), with the result that the at least one trailer camera (43) attached to this component is indirectly adjusted by the adjustment distance (W) in order to change the viewpoint (SP) of the at least one trailer camera (43).

5. Method according to claim 3 or 4, **characterized in that** the plausibility of the ascertained object information items (Ol) that result from an adjustment of the trailer camera (43) by the adjustment distance (W) by the active actuator system (8) is checked against object information items (Ol) resulting from the odometry data (DD) of the vehicle (1) which are selected from the group consisting of: wheel speed signal (SR) and/or vehicle speed (v1) and/or steering angle (LW) and/or articulation angle (KW) and/or transmission data (DG).

6. Method according to any of the preceding claims, **characterized in that** the object coordinates (xO, yO, zO) for a plurality of object points (PPi) are ascertained from the at least two images (B1, B2) by triangulation (T), and an object contour (OC) and/or an object shape (OF) is ascertained from the plurality of object points (PPi).

7. Method according to claim 6, **characterized in that** the object (O) is classified into object classes (OKi) on the basis of the object contour (OC) and/or the object shape (OF).

8. Method according to any of the preceding claims, **characterized in that** a plurality of trailer cameras (43) are provided and object information items (Ol) relating to an object (O) are ascertained using each trailer camera (43) independently of one another.

9. Method according to claim 8, **characterized in that** the plausibility of the object information item (Ol) ascertained by the plurality of trailer cameras (43) is checked.

10. Method according to any of the preceding claims, **characterized in that** more than two images (B) are recorded at different viewpoints (SP), and image points (BPi) assigned to the same object point (PPi) of the object (O) in the captured environment (U) are selected from each recorded image (B), object coordinates (xO, yO, zO) of the assigned object point (PPi) being ascertained from the image coordinates (xB, yB) of the selected image points (BPi) by triangulation (T) assuming a base length (L) between the respective viewpoints (SP) of the trailer camera (43).

11. Method according to any of the preceding claims, **characterized in that** a bundle adjustment (BA) is performed on the basis of the at least two recorded images (B1, B2).

12. Method according to any of the preceding claims, **characterized in that** a plurality of first image points (BP1i) in the first image (B1) are combined into a first feature point (MP1) and a plurality of second image points (BP2i) in the second image (B2) are combined to form a second feature point (MP2), the first feature point (MP1) and the second feature point (MP2) being selected in such a way that they are assigned to the same feature (M) of the object (O) in the captured environment (U),
object coordinates (xO, yO, zO) of the assigned feature (M) being ascertained from first image coordinates (xB, yB) of the first feature point (MP1) and second image coordinates (xB, yB) of the second feature point (MP2) by triangulation (T) assuming a base length (L) between the two viewpoints (SP1, SP2) of the trailer camera (43).

13. Control unit (5) for performing a method according to any of the preceding claims.

14. Vehicle (1) comprising a control unit (5) according to claim 13, wherein the vehicle (1) is multi-part and has at least one towing vehicle (2) and at least one trailer (3), wherein an articulation angle (KW) is formed between the towing vehicle (2) and the trailer (3), wherein at least one trailer camera (43) is arranged on the trailer (3).

## Revendications

1. Procédé pour la détermination d'une information d'objet (Ol) d'un objet (O) dans un environnement (U) d'un véhicule (1) en plusieurs parties constitué d'au moins un véhicule tracteur (2) et d'au moins une remorque (3), dans lequel au moins une caméra de remorque (43) est disposée au moins sur la remorque (3), comportant au moins les étapes suivantes :
- détection de l'environnement (U) avec l'au moins une caméra de remorque (43) à partir d'un premier point de vue (SP1) et, en fonction de cela, création d'une première image (B1) constituée de premiers points d'image (BP1i) (ST1) ;
- modification du point de vue (SP) de l'au moins une caméra de remorque (43) (ST2) ;
- détection de l'environnement (U) avec l'au moins une caméra de remorque (43) à partir d'un second point de vue (SP2) et, en fonction de cela, création d'une seconde image (B2) constituée de seconds points d'image (BP2i) (ST3) ;
- détermination d'une information d'objet (OI) concernant un objet (O) dans l'environnement (U) détecté (ST4) par
- la sélection d'au moins un premier point d'image (BP1i) dans la première image (B1) et au moins un second point d'image (BP2i) dans la seconde image (B2), dans lequel le premier point d'image (BP1i) et le second point d'image (BP2i) sont sélectionnés de telle sorte qu'ils sont associés au même point d'objet (PPi) de l'objet (O) dans l'environnement (U) détecté (ST4.1), et
- l'établissement de coordonnées d'objet (xO, yO, zO) du point d'objet (PPi) associé à partir de premières coordonnées d'image (xB, yB) de l'au moins un premier point d'image (BP1i) et de secondes coordonnées d'image (xB, yB) de l'au moins un second point d'image (BP2i) par triangulation (T) en supposant une longueur de base (L) entre les deux points de vue (SP1, SP2) de la caméra de remorque (43), dans lequel la longueur de base (L) entre les deux points de vue (SP1, SP2) est déterminée en fonction de données odométriques (DD) du véhicule (1), dans lequel les données odométriques (DD) caractérisent un réglage de la caméra de remorque (43) entre les deux points de vue (SP1, SP2),
dans lequel les données odométriques (DD) contiennent un angle d'articulation (KW) entre l'au moins une remorque (3) et l'au moins un véhicule tracteur (2) et/ou sont dépendantes de l'angle d'articulation (KW) afin d'augmenter la précision de l'établissement de la longueur de base (L) entre les deux points de vue de la caméra de remorque (43).

2. Procédé selon la revendication 1, **caractérisé en ce que** l'angle d'articulation (KW) est déterminé
- par l'intermédiaire d'un capteur d'angle d'articulation actif (16) au niveau d'un point d'accouplement (17) entre l'au moins un véhicule tracteur (2) et l'au moins une remorque (3), et/ou
- en fonction d'images (B) détectées par une caméra (4) sur le véhicule tracteur (2) et/ou sur la remorque (3).

3. Procédé selon la revendication 1 ou 2, **caractérisé en ce que** les données odométriques (DD) sont en outre générées en fonction d'une course de réglage (W), dans lequel l'au moins une caméra de remorque (43) est réglée sur la course de réglage (W) par la commande d'un système d'actionnement actif (8) sur la remorque (8), sans modifier pour autant un état de conduite (Z) du véhicule (1).

4. Procédé selon la revendication 3, **caractérisé en ce qu'**un système de réglage de caméra (9) est commandé en tant que système d'actionnement actif (8), lequel présente des servomoteurs (9a) et/ou des vérins pneumatiques (9b) et/ou des vérins hydrauliques (9c) et/ou des servovérins électriques (9d), dans lequel l'au moins une caméra de remorque (43) est fixée directement au système de réglage de caméra (9), de sorte que l'au moins une caméra de remorque (43) est réglée sur la course de réglage (W) lors d'une commande du système de réglage de caméra (9) pour la modification du point de vue (SP) de l'au moins une caméra de remorque (43), et/ou
**en ce qu'**un système de suspension pneumatique actif (10) comportant des ressorts pneumatiques (10a) ou un système de réglage de châssis (12) est commandé en tant que système d'actionnement actif (8), dans lequel la hauteur (H) d'une carrosserie de véhicule (11) de la remorque (3) est réglée sur la course de réglage (W) par une commande du système de suspension pneumatique actif (10) ou du système de réglage de châssis (12), de sorte que l'au moins une caméra de remorque (43) fixée sur la carrosserie de véhicule (11) de la remorque (3) est réglée indirectement sur la course de réglage (W) pour la modification du point de vue (SP) de l'au moins une caméra de remorque (43), et/ou
**en ce qu'**un système de réglage de composant (13) est commandé en tant que système d'actionnement actif (8), dans lequel un composant de la remorque (3), par exemple un composant aérodynamique (15), est réglé sur la course de réglage (W) par une commande du système de réglage de composant (13), de sorte que l'au moins une caméra de remorque (43) fixée audit composant est réglée indirectement sur la course de réglage (W) pour la modification du point de vue (SP) de l'au moins une caméra de remorque (43).

5. Procédé selon la revendication 3 ou 4, **caractérisé en ce que** les informations d'objet (OI) déterminées, lesquelles résultent d'un réglage de la caméra de remorque (43) sur la course de réglage (W) par le système d'actionnement actif (8), sont soumises à un contrôle de plausibilité avec des informations d'objet (OI) qui résultent des données odométriques (DD) du véhicule (1), lesquelles sont sélectionnées dans le groupe constitué de : signal de vitesse de rotation de roue (SR) et/ou vitesse de véhicule (v1) et/ou angle de braquage (LW) et/ou angle d'articulation (KW) et/ou données de transmission (DG).

6. Procédé selon l'une des revendications précédentes,
**caractérisé en ce que** les coordonnées d'objet (xO, yO, zO) sont déterminées pour plusieurs points d'objet (PPi) par triangulation (T) à partir des au moins deux images (B1, B2) et un contour d'objet (OC) et/ou une forme d'objet (OF) sont déterminés à partir des points d'objet (PPi).

7. Procédé selon la revendication 6, **caractérisé en ce que** l'objet (O) est divisé en classes d'objets (OKi) à l'aide du contour d'objet (OC) et/ou de la forme d'objet (OF).

8. Procédé selon l'une des revendications précédentes,
**caractérisé en ce que** plusieurs caméras de remorque (43) sont prévues et des informations d'objet (OI) concernant un objet (O) sont déterminées indépendamment les unes des autres à l'aide de chaque caméra de remorque (43).

9. Procédé selon la revendication 8, **caractérisé en ce que** les informations d'objet (OI) déterminées par les caméras de remorque (43) sont soumises à un contrôle de plausibilité.

10. Procédé selon l'une des revendications précédentes,
**caractérisé en ce que** plus de deux images (B) sont prises au niveau de différents points de vue (SP) et, à partir de chaque image (B) prise, des points d'image (BPi) sont sélectionnés, lesquels sont associés au même point d'objet (PPi) de l'objet (O) dans l'environnement (U) détecté, dans lequel des coordonnées d'objet (xO, yO, zO) du point d'objet (PPi) associé sont déterminées à partir des coordonnées d'image (xB, yB) des points d'image (BPi) sélectionnés par triangulation (T) en supposant une longueur de base (L) entre les points de vue (SP) respectifs de la caméra de remorque (43).

11. Procédé selon l'une des revendications précédentes,
**caractérisé en ce qu**'une compensation de faisceau (BA) est réalisée à l'aide des au moins deux images (B1, B2) prises.

12. Procédé selon l'une des revendications précédentes,
**caractérisé en ce que** plusieurs premiers points d'image (BP1i) dans la première image (B1) sont regroupés en un premier point caractéristique (MP1) et plusieurs seconds points d'image (BP2i) dans la seconde image (B2) sont regroupés en un second point caractéristique (MP2), dans lequel le premier point caractéristique (MP1) et le second point caractéristique (MP2) sont sélectionnés de telle sorte qu'ils sont associés à la même caractéristique (M) de l'objet (O) dans l'environnement (U) détecté,
dans lequel des coordonnées d'objet (xO, yO, zO) de la caractéristique (M) associée sont déterminées à partir de premières coordonnées d'image (xB, yB) du premier point caractéristique (MP1) et de secondes coordonnées d'image (xB, yB) du second point caractéristique (MP2) par triangulation (T) en supposant une longueur de base (L) entre les deux points de vue (SP1, SP2) de la caméra de remorque (43).

13. Unité de commande (5) pour la réalisation d'un procédé selon l'une des revendications précédentes.

14. Véhicule (1) comportant une unité de commande (5) selon la revendication 13, dans lequel le véhicule (1) est en plusieurs parties et présente au moins un véhicule tracteur (2) et au moins une remorque (3), dans lequel un angle d'articulation (KW) se forme entre le véhicule tracteur (2) et la remorque (3), dans lequel au moins une caméra de remorque (43) est disposée sur la remorque (3).
